# EUROPEAN PATENT SPECIFICATION

(11) **EP 2 565 056 B1**
(45) Date of publication and mention of the grant of the patent: **19.06.2019**
(21) Application number: 12181960.1
(22) Date of filing: 28.08.2012
(51) Int. Cl.: B60C 1/00, B60C 11/00

(54) **Pneumatic tire with dual tread cap**
Luftreifen mit doppelter Lauffläche
Pneu doté d'un capuchon à double bande de roulement

(30) Priority: 30.08.2011 US 201113220780
(43) Date of publication of application: 06.03.2013
(73) Proprietor: The Goodyear Tire & Rubber Company, Akron, OH 44316-0001 (US)
(72) Inventor: Erceg, Boris, D-63456 Hanau (DE); Milse, Matthias, D-63801 Kleinostheim (DE); Riegel, Joachim, D-63796 Kahl (DE); Maegerle, Wolfgang Karl, D-63526 Erlensee (DE)
(74) Representative: Kutsch, Bernd

(56) References cited:
- WO-A1-2011/064056
- JP-A- 6 040 213
- US-A- 4 385 653

## Description

### Background of the Invention

Pneumatic tires have traditionally been constructed by applying an outer homogenous tread stock over a supporting carcass structure and vulcanizing the resulting composite structure.

Certain tread compounds provide better traction than others. Also, certain tread compounds provide better rolling resistance than others. Although a tire which has both low rolling resistance and a maximum amount of traction is desirable, a tread compound which provides good rolling resistance in a tire may not generally provide a maximum amount of traction, and a tread compound which provides a maximum amount of traction may not provide as low of rolling resistance as may be desired.

Pneumatic tires having a tread/running surface comprised of a silica-rich rubber composition, while sometimes desirable to impart various physical properties to the tire tread such as, for example, reduced rolling resistance and suitable traction, may be disadvantageous because of the relatively high ratio of silica to carbon black in the reinforcing filler content. Such high silica/carbon black ratios represent a significant increase in cost of the silica-rich tread in terms of increased material cost (the silica) and increased cost of processing the silica-rich rubber composition. Further, such silica-rich tread rubber, with its minimal carbon black content, may have a relatively low electrical conductivity and may therefore be electrically resistive to conducting static electrical charge from the tire tread to the ground.

A path of increased electrical conductivity for a silica-rich tread may be provided, for example, by positioning a strip of a carbon black rich rubber composition either as a thin cover strip over a portion of the running surface of the tread or as a thin, non load bearing, strip extending through the body of the tread to its running surface as described in EP-A- 0 718 127.

Some tire treads have a cap/base construction as shown in DE-A-19812934, with the tread cap designed to be ground-contacting with a lug/groove configuration, and with the tread base underlying and supporting the tread cap and positioned between the tread cap and the tire carcass/belt structure. The tread base is not intended to be ground-contacting and, thus, not normally intended to have the same tread properties as, for example, the desired tread cap properties of traction and treadwear.

While the tread cap, in a tread cap/base construction, may be designed to be ground-contacting and, therefore, provide traction in combination with acceptable tread wear and rolling resistance, the underlying tread base may be designed to fulfill an entirely different function and not be designed to be ground-contacting at all. In particular, the tread base may fulfill a function of transmitting multiaxial tread cap forces to the tire carcass, usually with relatively low heat generation. These forces may include forces resulting from the tread cap working under forces such as compression, bending, and/or shear, all of which may generate heat, cause temperature build-up, and cause the forces to undesirably impact on the tire carcass itself. Such forces may result, for example, from the tire's cornering, braking, and/or varied handling activities, all of which may generate heat within the tire tread.

In one conventional pneumatic tire, in order to both reduce the material and fabrication cost of a silica-rich tread and also provide a path of increased electrical conductivity from the tire through its tread to the ground, a tread running surface may be divided into three distinct load bearing zones, which may include at least one silica-rich load bearing zone and at least one carbon black-rich load bearing zone of rubber compositions. By requiring the tread cap zones to be load-bearing, each of the three distinct running surface tread cap zones may extend from the outer surface of the tread to the underlying distinct carbon black-rich tread base rubber layer so that all of the load on the tire is communicated by each of the three tread cap layer zones directly to the tread base layer instead of directly to the tire carcass itself.

JP-A-6-40213 describes a tread for a pneumatic tire in accordance with a preamble of claim 1.

Further tires having a split tread are described in US-A-4,385,653, DE 198 12 934 A1, EP 1 609 624 A1 and WO-A-2001/064056.

### Summary of the Invention

The invention relates to a tread in accordance with claim 1, to a tire in accordance with claim 10, and to a method in accordance with claim 13.

Dependent claims refer to preferred embodiments of the invention.

In one aspect of the invention, a pneumatic tire in accordance with the present invention may include a tread base layer, a first tread cap layer radially outside of the tread base layer, a second tread cap layer radially outside of the tread base layer and both radially outside and axially adjacent the first tread cap layer, a first tread skirt disposed at an inner tread edge of the pneumatic tire and axially adjacent the tread base layer and the first tread cap layer, and a second tread skirt disposed at an outer tread edge of the pneumatic tire and axially adjacent the tread base layer and the second tread cap layer.

According to another aspect of the present invention, the tread base layer may comprise a rubber composition comprising a diene based elastomer having from 20 part by weight to 150 part by weight, per 100 parts by weight of elastomer, of carbon black.

According to still another aspect of the present invention, the first tread cap layer may comprise a diene based elastomer having from 20 parts by weight to 100 parts by weight, per 100 parts by weight of elastomer, of silica.

According to yet another aspect of the present invention, the tread base layer may have a tan delta ranging from 0.1 to 0.2, a storage modulus ranging from 4 MPa to 13 MPa, and a shore A hardness ranging from 45 to 70.

According to still another aspect of the present invention, the first tread cap layer may have a tan delta ranging from 0.05 to 0.20, a storage modulus ranging from 4 MPa to 12 MPa, and a shore A hardness ranging from 50 to 75.

According to yet another aspect of the present invention, the first tread cap layer may comprise a conjugated diene-based elastomer having from 30 phr to 70 phr of rubber reinforcing filler having from 30 phr to 80 phr carbon black and zero to 40 phr precipitated silica.

According to still another aspect of the present invention, the first tread cap layer may comprise 50 phr to 80 phr carbon black.

According to yet another aspect of the present invention, the first tread cap layer may comprise 10 phr to 25 phr precipitated silica.

According to still another aspect of the present invention, the first tread cap layer may have a storage modulus ranging from 4 MPa to 13 MPa.

According to yet another aspect of the present invention, the first tread cap layer may comprise a conjugated diene-based elastomer and a reinforcing filler having 50 phr to 80 phr precipitated silica and 10 phr to 40 phr carbon black.

According to still another aspect of the present invention, an axially outer end portion of the second tread cap layer may extend radially inward to a junction of the tread base layer, the first tread cap layer, and the second tread skirt.

In one aspect of the invention, the first tread skirt is not in contact with the second tread cap layer.

In a preferred aspect of the invention, the second tread skirt is in contact with the tread base layer, the second tread cap layer but not in contact with the first tread cap layer. Alternatively, the second tread skirt may be in contact with the tread base layer, the second tread cap layer and also in contact with the first tread cap layer.

In a preferred aspect of the invention, the first tread cap layer and the second tread cap layer are both ground contacting when the tread is attached to a tire mounted to a vehicle. In this case, the axial width over which the first tread cap layer is ground contacting may be in a range of from 10 % to 45%, alternatively from 20% to 40% or from 25% to 35%, of the tire footprint axial width; and the axial width over which the second tread cap layer is ground contacting may correspondingly be in a range of from 55 % to 90%, alternatively from 60% to 80% or from 65% to 75%, of the tire footprint axial width.

In another aspect of the invention, the first tread cap layer and/or the second tread cap layer substantially has an L-shape in cross section.

In a preferred aspect of the invention, the tread base layer comprises a rubber composition comprising a diene based elastomer having from 20 part by weight to 150 part by weight, alternatively from 60 to 100 parts by weight, per 100 parts by weight of elastomer, of carbon black.

In a preferred aspect of the invention, the first tread cap layer comprises a diene based elastomer having from 20 parts by weight to 100 parts by weight, alternatively from 40 to 80 parts by weight, per 100 parts by weight of elastomer, of silica.

In a preferred aspect of the invention, the tread base layer has at least one (or all) of a tan delta ranging from 0.1 to 0.2, a storage modulus ranging from 4 MPa to 13 MPa, and a shore A hardness ranging from 45 to 70.

In a preferred aspect of the invention, the first tread cap layer layer has at least one (or all) of a tan delta ranging from 0.05 to 0.2, a storage modulus ranging from 4 MPa to 12 MPa, and a shore A hardness ranging from 50 to 75.

In a preferred aspect of the invention, the second tread cap layer has at least one of a tan delta ranging from 0.05 to 0.2, a storage modulus ranging from 4 MPa to 12 MPa, and a shore A hardness ranging from 55 to 80.

In one aspect of the invention, the shore A hardness of the tread base layer may be lower, preferably at least 10% or at least 20% lower, than the shore A hardness of the first tread cap layer and of the second tread cap layer.

In one aspect of the invention, the shore A hardness of the second tread cap layer is higher, preferably at least 5% or at least 10% higher, than the shore A hardness of the first tread cap layer.

In one aspect of the invention, the second tread cap layer may comprise a conjugated diene-based elastomer having from 30 phr to 80 phr, alternatively 50 to 80 phr, of carbon black and 0 to 40 phr, alternatively 15 to 40 phr or 10 to 25 phr, of silica. Overall, the second tread cap layer may comprise from 30 phr to 120, alternatively from 30 to 70 phr, of rubber reinforcing filler

In one aspect of the invention, the first tread cap layer may comprise a conjugated diene-based elastomer having from 30 phr to 80 phr, alternatively 50 to 80 phr, of carbon black and 0 to 40 phr, alternatively 15 to 40 phr or 10 to 25 phr, of silica. Overall, the first tread cap layer may comprise from 30 phr to 120, alternatively from 30 to 70 phr, of rubber reinforcing filler.

In one aspect of the invention, the first tread cap layer may comprise a conjugated diene-based elastomer and a reinforcing filler comprising 50 phr to 80 phr of silica and 10 phr to 40 phr carbon black.

In one aspect of the invention, first tread cap layer comprises a conjugated diene-based elastomer, carbon black and silica, and the second tread cap layer comprises a conjugated diene-based elastomer, carbon black and optionally silica. Preferably, the carbon black content of the first tread cap layer is lower, more preferably at least 10 phr lower, than the carbon black content of the second tread cap layer. Preferably, the silica content of the first tread cap layer is higher, more preferably at least 20 phr or at least 40 phr higher, than the silica content of the second tread cap layer.

Preferably, the portion of the second tread cap layer axially adjacent to the portion of the first tread cap layer is on the axial outer side of the tire when the tire is mounted to a vehicle in accordance with the tire specification.

Preferably, the first tread edge is on the axial inner side of the tire when the tire is mounted to a vehicle in accordance with the tire specification and the second tread edge is on the axial outer side of the tire when the tire is mounted to a vehicle in accordance with the tire specification

Preferably, the rubber composition of the first tread cap layer is optimized for grip on dry roads and for low rolling resistance and the rubber composition of the second tread cap layer is optimized for grip of wet and dry roads, i.e. the grip on wet roads of the rubber composition of first tread cap layer is higher than the grip on wet roads of the rubber composition of second tread cap layer, and the rolling resistance of the rubber composition of second tread cap layer is lower than the rolling resistance of the rubber composition of first tread cap layer.

In one aspect of the invention, the tread may be manufactured by extruding the first tread cap layer as a unitary extrudate of a single rubber compound in one extruder and the second cap layer is extruded by another extruder.

In an other aspect of the invention, the tread may be manufactured by extruding the first tread cap layer as a unitary extrudate of a single rubber compound in one extruder and the second tread cap layer is coextruded as a unitary extrudate of a single rubber compound with the first tread cap layer in the same extruder.

In both cases, the tread base layer may be a unitary extrudate coextruded with the first tread cap layer.

### Brief Description of the Drawings

Figure 1 is a schematic cross section of one example pneumatic tire for use with the present invention.
Figure 2 is a detailed schematic cross section of the example pneumatic tire of Figure 1.

### Definitions

The following definitions are controlling for the present invention.
"Axial" and "axially" are used herein to refer to lines or directions that are parallel to the axis of rotation of the tire.
"Footprint" means the contact patch or area of contact of the tire tread with a flat surface at zero speed and under normal load and pressure.
"Inner" or "Inboard Side" means toward the inside of the tire and vehicle and "outer" means toward their exterior or the outboard side.
"Phr" means parts by weight of a respective material per 100 parts by weight of rubber or elastomer.
"Radial" and "radially" are used to mean directions radially toward or away from the axis of rotation of the tire.

### Description of an Example of the Present Invention

A performance gap may exist between high rolling resistance tread materials and high traction tread materials in a pneumatic tire. A tread in accordance with the present invention may address this gap and thereby mitigate the conventional trade-off between rolling resistance and traction.

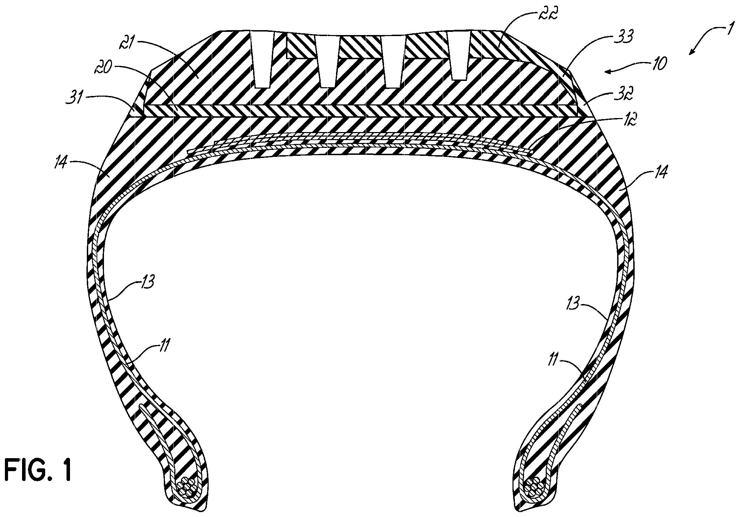

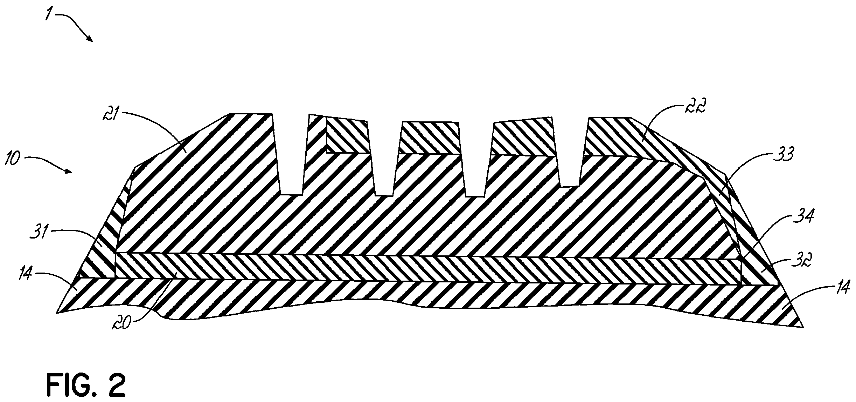

A pneumatic tire 1 for use with such a tread 10 may include a carcass 11 and a rubber encapsulated belt layer 12 between spaced apart relatively inextensible beads and sidewalls 14, as well as an innerliner layer 13. A tread 10 of the pneumatic tire 1, in accordance with the present invention, may split two tread cap compounds not only in a horizontal or a vertical direction, but in both directions, in order to optimize rolling resistance and wet and dry traction (FIGS. 1 & 2). FIG. 1 shows a cross-section of a pneumatic tire 1 having a ground contacting composite tread 10 comprising a tread base layer 20, a ground contacting first tread cap layer 21 radially outside of the tread base layer, a ground contacting second tread cap layer 22 radially outside of the tread base layer and both radially outside and axially adjacent the first tread cap layer, a first tread skirt 31 disposed at an inner tread edge of the pneumatic tire and axially adjacent the tread base layer and the first tread cap layer, and a second tread skirt 32 disposed at an outer tread edge of the pneumatic tire and axially adjacent the tread base layer and the second tread cap layer. The axially outer end portion 33 of the second tread cap layer 22 also extends radially inward to a junction 34 of the tread base layer 20, the first tread cap layer 21, and the second tread skirt 32 (FIG. 2).

The tread 10 may be a co-extruded, multi-component rubber extrudate and may be prepared by co-extruding at least two different rubber compositions by using an individual extruder for each rubber composition which individually cause an extruded rubber composition to flow through a suitable die member to, in turn cause the individual rubber compositions to controllably flow and join within the die member and exit therefrom in a profiled multi-component rubber extrudate. Thus, the first cap layer 21 may be extruded as a unitary extrudate of a single rubber compound in one extruder and the second cap layer 22 may be extruded by another extruder.

The tread base layer 20, first tread cap layer 21, second tread cap layer 22, first tread skirt 31, and/or second tread skirt 32 may exemplarily comprise at least one conjugated diene-based elastomer and from about 30 phr to about 70 phr of rubber reinforcing filler selected from carbon black and precipitated silica wherein the filler comprises from about 30 phr to about 80 phr of said carbon black and from zero to 40 phr of precipitated silica. The tread base layer 20, first tread cap layer 21, second tread cap layer 22, first tread skirt 31, and/or second tread skirt 32 may exemplarily further comprise about 50 phr to about 80 phr carbon black. The tread base layer 20, first tread cap layer 21, second tread cap layer 22, first tread skirt 31, and/or second tread skirt 32 may exemplarily further comprise about 10 phr to about 25 phr precipitated silica. The tread base layer 20, first tread cap layer 21, second tread cap layer 22, first tread skirt 31, and/or second tread skirt 32 may exemplarily further comprise a fully rubber reinforcing carbon black. The tread base layer 20, first tread cap layer 21, second tread cap layer 22, first tread skirt 31, and/or second tread skirt 32 may exemplarily further comprise additives, such as curatives, processing aids, antidegradants, etc.

The tread base layer 20, first tread cap layer 21, second tread cap layer 22, first tread skirt 31, and/or second tread skirt 32 may exemplarily further be characterized as having specific physical properties making it suitable for use in the pneumatic tire 1. The tread base layer 20, first tread cap layer 21, second tread cap layer 22, first tread skirt 31, and/or second tread skirt 32 may exemplarily have a tan delta ranging from 0.1 to 0.2, a storage modulus ranging from 4 MPa to 13 MPa, and a shore A hardness ranging from 45 to 70. Tan delta and storage modulus E* are measured by viscoelastic spectrometer at 70 ºC. Shore A hardness are measured according to DIN 53505 at room temperature.

The tread base layer 20, first tread cap layer 21, second tread cap layer 22, first tread skirt 31, and/or second tread skirt 32 may exemplarily further comprise at least one conjugated diene-based elastomer and a reinforcing filler comprising about 50 phr to about 80 phr precipitated silica and about 10 phr to about 40 phr carbon black. As stated above, the tread base layer 20, first tread cap layer 21, second tread cap layer 22, first tread skirt 31, and/or second tread skirt 32 may exemplarily further comprise additives, such as curatives, processing aids, antidegradants, etc.

Alternatively, the tread base layer 20, first tread cap layer 21, second tread cap layer 22, first tread skirt 31, and/or second tread skirt 32 may exemplarily further be characterized as having specific physical properties making it suitable for use in the pneumatic tire 1. The tread base layer 20, first tread cap layer 21, second tread cap layer 22, first tread skirt 31, and/or second tread skirt 32 may exemplarily further have a tan delta ranging from 0.05 to 0.20, a storage modulus ranging from 4 MPa to 12 MPa, and a shore A hardness ranging from 50 to 75.

The tread base layer 20, first tread cap layer 21, second tread cap layer 22, first tread skirt 31, and/or second tread skirt 32 may exemplarily further be used with rubbers or elastomers containing olefinic unsaturation. The phrases "rubber" or "elastomer containing olefinic unsaturation" or "conjugated diene-based elastomer" are intended to include both natural rubber and its various raw and reclaimed forms, as well as various synthetic rubbers. The terms "rubber" and "elastomer" may be used interchangeably, unless otherwise prescribed. The terms "rubber composition", "compounded rubber", and "rubber compound" may be used interchangeably to refer to rubber which has been blended or mixed with various ingredients and materials for use in the rubber mixing or rubber compounding. Representative synthetic polymers may be the homopolymerization products of butadiene and its homologues and derivatives, for example, methylbutadiene, dimethylbutadiene, and pentadiene, as well as copolymers such as those formed from butadiene or its homologues or derivatives with other unsaturated monomers. Among the latter may be acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid, and styrene. The latter compound may polymerize with butadiene to form SBR, as well as vinyl esters and various unsaturated aldehydes, ketones, and ethers, e.g., acrolein, methyl isopropenyl ketone, and vinylethyl ether. Specific examples of synthetic rubbers may include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile, and methyl methacrylate, as well as ethylene/propylene terpolymers, also known as ethylene/propylene/diene monomer (EPDM), and ethylene/propylene/dicyclopentadiene terpolymers. Additional examples of rubbers may include silicon-coupled and tin-coupled star-branched polymers.

The tread base layer 20, first tread cap layer 21, second tread cap layer 22, first tread skirt 31, and/or second tread skirt 32 may exemplarily further comprise at least two of diene based rubbers, e.g., a combination of two or more rubbers such as cis 1,4-polyisoprene rubber (natural or synthetic), 3,4-polyisoprene rubber, styrene/isoprene/butadiene rubber, emulsion, and solution polymerization derived styrene/butadiene rubbers, cis 1,4-polybutadiene rubbers and emulsion polymerization prepared butadiene/acrylonitrile copolymers.

An emulsion polymerization may be derived styrene/butadiene (E-SBR) having a styrene content of 20 percent bound styrene to 28 percent bound styrene or an E-SBR having a medium to relatively high bound styrene content, e.g., a bound styrene content of 30 percent to 45 percent. The styrene content of 30 percent to 45 percent for the E-SBR may be beneficial for enhancing traction, or skid resistance, of the tread 10. The presence of the E-SBR itself may be beneficial for enhancing processability of the uncured elastomer composition mixture, especially in comparison to a utilization of a solution polymerization prepared SBR (S-SBR).

An emulsion polymerization prepared E-SBR may be styrene and 1,3-butadiene copolymerized as an aqueous emulsion. The bound styrene content may vary, for example, from 5 percent to 50 percent. The E-SBR may also contain acrylonitrile to form a terpolymer rubber, such as E-SBAR, in amounts, for example, of 2 weight percent acrylonitrile to 30 weight percent bound acrylonitrile in the terpolymer. Diene based rubbers for use in the pneumatic tire 1 may be emulsion polymerization prepared styrene/butadiene/acrylonitrile copolymer rubbers containing about 2 weight percent bound acrylonitrile to 40 weight percent bound acrylonitrile in the copolymer.

The solution polymerization prepared SBR (S-SBR) may have a bound styrene content from 5 percent to 50 percent or 9 percent to 36 percent. The S-SBR may be prepared, for example, by organo lithium catalyzation in the presence of an organic hydrocarbon solvent. The S-SBR may improve tire rolling resistance as a result of lower hysteresis when it is used in the tread 10.

The 3,4-polyisoprene rubber (3,4-PI) in the tread 10 may enhance traction. The 3,4-PI and use thereof is more fully described in US-A- 5,087,668. Tg is the glass transition temperature which may be determined by a differential scanning calorimeter at a heating rate of 10°C per minute.

The cis 1,4-polybutadiene rubber (BR) in the tread 10 may enhance tire treadwear and rolling resistance. BR may be prepared, for example, by organic solution polymerization of 1,3-butadiene. Further, BR may be have at least 90 percent cis 1,4 content. The rubber compositions may additionally contain a sulfur containing organosilicon compound, such as:

Z-Alk-Sₙ-Alk-Z

in which Z is selected from the group consisting of 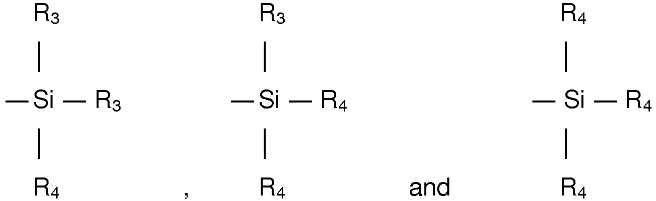 where R₃ is an alkyl group of 1 to 4 carbon atoms, cyclohexyl, or phenyl; R₄ is alkoxy of 1 to 8 carbon atoms, or cycloalkoxy of 5 to 8 carbon atoms; Alk is a divalent hydrocarbon of 1 to 18 carbon atoms and n is an integer between 2 and 8.

Sulfur containing organosilicon compounds may include: 3,3'-bis(trimethoxy or triethoxy silylpropyl) sulfides; 3,3'-bis(triethoxysilylpropyl) disulfide; and 3,3'-bis(triethoxysilylpropyl) tetrasulfide. Therefore, for the above formula, Z may be 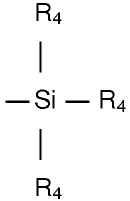 where R₄ is an alkoxy of 2 to 4 carbon atoms; alk is a divalent hydrocarbon of 2 to 4 carbon atoms; and n is an integer from 2 to 5.

The amount of the sulfur containing organosilicon compound in the above formula in a rubber composition may vary depending on the level of other additives. The amount of the compound in the above formula may range from 0.5 phr to 20.0 phr or 1.0 phr to 10.0 phr. Fillers such as silica and carbon black may also be present.

Various commercially available silicas may be used, such as, only for example herein: silicas commercially available from PPG Industries under the Hi-Sil trademark with designations 210 and 243; silicas available from Rhone-Poulenc, with, for example, designations of Z1165MP and Z165GR; and silicas available from Degussa AG with, for example, designations VN2 and VN3.

Representative examples of carbon blacks may include N110, N121, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990, and N991. These carbon blacks may have iodine absorptions ranging from 9 g/kg to 145 g/kg and a DBP number ranging from 34 cm³/100 g to 150 cm³/100 g.

The rubber composition may be compounded by various methods, such as mixing the various sulfur-vulcanizable constituent rubbers with various additive materials, such as, for example, sulfur donors, curing aids, such as activators and retarders and processing additives, such as oils, resins including tackifying resins and plasticizers, fillers, pigments, fatty acid, zinc oxide, waxes, antioxidants and antiozonants, and peptizing agents. Examples of sulfur donors may include: elemental sulfur (free sulfur); an amine disulfide; polymeric polysulfide; and sulfur olefin adducts. The sulfur vulcanizing agent may be elemental sulfur. The sulfur vulcanizing agent may range from 0.5 phr to 8.0 phr or from 1.5 phr to 6.0 phr. Tackifier resins may comprise 0.5 phr to 10.0 phr or 1.0 phr to 5.0 phr. Processing aids may comprise 1 phr to 50 phr. Such processing aids may include, for example, aromatic, naphthenic, paraffinic processing oils, and/or low PCA oils characterized by a polycyclic aromatic content of less than 3% (IP 346 method); such low PCA oils may include MES, TDAE, and heavy naphthenic oils.

Amounts of antioxidants may comprise 1 phr to 5 phr. Antioxidants may be, for example, diphenyl-p-phenylenediamine. Amounts of antiozonants may comprise 1 phr to 5 phr. Amounts of fatty acids may include stearic acid having 0.5 phr to 3.0 phr. Amounts of zinc oxide may 2 phr to 5 phr. Amounts of waxes may comprise 1 phr to 5 phr. Microcrystalline waxes may be used. Amounts of peptizers may comprise 0.1 phr to 1 phr. Peptizers may be, for example, pentachlorothiophenol and dibenzamidodiphenyl disulfide. The sulfur vulcanizable rubber composition may then be sulfur-cured or vulcanized.

Accelerators may control the time and/or temperature required for vulcanization and improve the properties of the vulcanizate. A single accelerator system may be used, e.g., a primary accelerator. The primary accelerator(s) may have amounts ranging from 0.5 phr to 4 phr or 0.8 phr to 1.5 phr. Combinations of a primary and a secondary accelerator may be used with the secondary accelerator having from 0.05 phr to 3.00 phr in order to activate and improve the properties of the vulcanizate. In addition, delayed action accelerators may be used which are not affected by normal processing temperatures but produce a satisfactory cure at ordinary vulcanization temperatures. Vulcanization retarders may also be used. Suitable accelerators may be amines, disulfides, guanidines, thioureas, thiazoles, thiurams, sulfenamides, dithiocarbamates, and xanthates. The primary accelerator may be a sulfenamide. The secondary accelerator may be a guanidine, dithiocarbamate, or thiuram compound.

The ingredients of the rubber composition may be mixed in two stages - at least one non-productive stage followed by a productive mix stage. The final curatives may include sulfur vulcanizing agents mixed in the final stage (e.g., the "productive" mix stage in which the mixing occurs at a temperature, or ultimate temperature, lower than the mix temperature(s) than preceding non-productive mix stages). The rubber may be mixed in one or more non-productive mix stages.

A rubber composition containing the sulfur-containing organosilicon compound may be subjected to a thermomechanical mixing step. The thermomechanical mixing step may comprise a mechanical working in a mixer or extruder for a period of time suitable for producing a rubber temperature between 140°C and 190°C. The appropriate duration of the thermomechanical working may vary as a function of the operating conditions and the volume and nature of the components. For example, the thermomechanical working may be from 1 minutes to 20 minutes.

Vulcanization of the rubber composition may generally be carried out at temperatures ranging from 100°C to 200°C. Other vulcanization processes, such as heating in a press or mold, heating with superheated steam or hot air, or heated with superheated steam in a salt bath, may be used.

The pneumatic tire 1 may be built, shaped, molded, and cured by various methods. The pneumatic tire 1 may be a passenger tire, aircraft tire or truck tire. The pneumatic tire 1 may also be radial or bias. Preferably, it is a radial passenger tire.

## Claims

1. A tread for a pneumatic tire, the tread (10) comprising a tread base layer (20), a first tread cap layer (21) radially outside of the tread base layer (20), and a second tread cap layer (22) radially outside of the tread base layer (20), wherein the second tread cap layer (22) has a portion radially outside of a portion of the first tread cap layer (21) and a portion axially adjacent to a portion of the first tread cap layer (21), **characterized in that**
(i) the first tread cap layer (21) and/or the second tread cap layer (22) substantially has a L-shape in cross section; wherein the shore A hardness of the tread base layer (20) is lower than the shore A hardness of the first tread cap layer (21) and of the second tread cap layer (22), and wherein the shore A hardness of the second tread cap layer (22) is higher than the shore A hardness of the first tread cap layer (21); or **in that**
(ii) the tread (10) further comprises a first tread skirt (31) disposed at a first tread edge and axially adjacent the tread base layer (20) and the first tread cap layer (21), and a second tread skirt (32) disposed at a second tread edge and axially adjacent the tread base layer (20) and the second tread cap layer (22), wherein the first tread skirt (31) is not in contact with the second tread cap layer (22).

2. The tread of claim 1 wherein the second tread skirt (32) is in contact with the tread base layer (20), the second tread cap layer (22) and not in contact with the first tread cap layer (21).

3. The tread of claim 1 wherein the second tread skirt (32) is in contact with the tread base layer (20), the second tread cap layer (22) and in contact with the first tread cap layer (21).

4. The tread of at least one of the previous claims wherein the first tread cap layer (21) and the second tread cap layer (22) are both ground contacting when the tread (10) is attached to a tire (1) mounted to a vehicle, and wherein the axial width over which the first tread cap layer is ground contacting is in a range of from 10 % to 45%, alternatively 20% to 40% or 25% to 35%, of the tire footprint axial width, and the axial width over which the second tread cap layer is ground contacting is in a range of from 55 % to 90%, alternatively 60% to 80% or 65% to 75%, of the tire footprint axial width.

5. The tread of claim 4 wherein the axial width over which the first tread cap layer is ground contacting is in a range of from 20% to 40% or 25% to 35% of the tire footprint axial width, and the axial width over which the second tread cap layer is ground contacting is in a range of from 60% to 80% or 65% to 75% of the tire footprint axial width.

6. The tread of at least one of the previous claims wherein:
(i) the tread base layer (20) has at least one of a tan delta ranging from 0.1 to 0.2, a storage modulus ranging from 4 MPa to 13 MPa, and a shore A hardness ranging from 45 to 70;
(ii) the first tread cap layer (21) has at least one of a tan delta ranging from 0.05 to 0.2, a storage modulus ranging from 4 MPa to 12 MPa, and a shore A hardness ranging from 50 to 75; and
(iii) the second tread cap layer (22) has at least one of a tan delta ranging from 0.05 to 0.2, a storage modulus ranging from 4 MPa to 12 MPa, and a shore A hardness ranging from 55 to 80.

7. The tread of at least one of the previous claims wherein the shore A hardness of the tread base layer (20) is at least 10% lower than the shore A hardness of the first tread cap layer (21) and of the second tread cap layer (22), and wherein the shore A hardness of the second tread cap layer (22) is at least 5% higher than the shore A hardness of the first tread cap layer (21).

8. The tread of at least one of the previous claims wherein the first tread cap layer (21) comprises a conjugated diene-based elastomer, carbon black and silica, and wherein the second tread cap layer (22) comprises a conjugated diene-based elastomer, carbon black and optionally silica, wherein
(i) the carbon black content of the first tread cap layer (21) is lower, preferably at least 10 phr lower, than the carbon black content of the second tread cap layer (22); and/or
(ii) the silica content of the first tread cap layer (21) is higher, preferably at least 20 phr or at least 40 phr higher, than the silica content of the second tread cap layer (22).

9. The tread of at least one of the previous claims wherein an end portion of the second tread cap layer (22) extends radially inward to a junction (34) of the tread base layer (20), the first tread cap layer (21), and the second tread skirt (32).

10. A pneumatic tire comprising a tread in accordance with at least one of the previous claims.

11. The pneumatic tire of claim 10 wherein the portion of the second tread cap layer (22) axially adjacent to the portion of the first tread cap layer (21) is on the axial outer side of the tire (1) when the tire is mounted to a vehicle in accordance with the tire specification.

12. The pneumatic tire of claim 10 wherein the first tread edge is on the axial inner side of the tire (1) when the tire is mounted to a vehicle in accordance with the tire specification and the second tread edge is on the axial outer side of the tire (1) when the tire is mounted to a vehicle in accordance with the tire specification

13. A method of manufacturing a tread in accordance with at least one of the claims 1 to 9 wherein:
(i) the first tread cap layer (21) is extruded as a unitary extrudate of a single rubber compound in one extruder and the second cap layer (22) is extruded by another extruder; or
(ii) the first tread cap layer (21) is extruded as a unitary extrudate of a single rubber compound in one extruder and the second tread cap layer (22) is coextruded as a unitary extrudate of a single rubber compound with the first tread cap layer (21) in the same extruder

14. The method of claim 13 wherein the tread base layer (20) is a unitary extrudate coextruded with the first tread cap layer (21).

## Patentansprüche

1. Lauffläche für einen Luftreifen, wobei die Lauffläche (10) eine Laufstreifen-Unterteillage (20), eine erste Laufstreifen-Oberteillage (21) radial außerhalb der Laufstreifen-Unterteillage (20) und eine zweite Laufstreifen-Oberteillage (22) radial außerhalb der Laufstreifen-Unterteillage (20) umfasst, wobei die zweite Laufstreifen-Oberteillage (22) einen Abschnitt radial außerhalb von einem Abschnitt der ersten Laufstreifen-Oberteillage (21) und einen Abschnitt axial benachbart zu einem Abschnitt der ersten Laufstreifen-Oberteillage (21) aufweist, **dadurch gekennzeichnet, dass**
(i) die erste Laufstreifen-Oberteillage (21) und/oder die zweite Laufstreifen-Oberteillage (22) im Wesentlichen eine L-Form im Querschnitt aufweist; wobei die Shore A-Härte der Laufstreifen-Unterteillage (20) niedriger als die Shore A-Härte der ersten Laufstreifen-Oberteillage (21) und der zweiten Laufstreifen-Oberteillage (22) ist, und wobei die Shore A-Härte der zweiten Laufstreifen-Oberteillage (22) höher als die Shore A-Härte der ersten Laufstreifen-Oberteillage (21) ist; oder dass
(ii) die Lauffläche (10) weiter einen ersten Laufstreifen-Seitenteil (31), der an einer ersten Laufflächenkante und axial benachbart zur Laufstreifen-Unterteillage (20) und der ersten Laufstreifen-Oberteillage (21) angeordnet ist, und einen zweiten Laufstreifen-Seitenteil (32), der an einer zweiten Laufflächenkante und axial benachbart zur Laufstreifen-Unterteillage (20) und der zweiten Laufstreifen-Oberteillage (22) angeordnet ist, umfasst, wobei der erste Laufstreifen-Seitenteil (31) nicht mit der zweiten Laufstreifen-Oberteillage (22) in Kontakt ist.

2. Lauffläche nach Anspruch 1, wobei der zweite Laufstreifen-Seitenteil (32) in Kontakt mit der Laufstreifen-Unterteillage (20) und der zweiten Laufstreifen-Oberteillage (22) ist und nicht in Kontakt mit der ersten Laufstreifen-Oberteillage (21) ist.

3. Lauffläche nach Anspruch 1, wobei der zweite Laufstreifen-Seitenteil (32) in Kontakt mit der Laufstreifen-Unterteillage (20) und der zweiten Laufstreifen-Oberteillage (22) ist und in Kontakt mit der ersten Laufstreifen-Oberteillage (21) ist.

4. Lauffläche nach mindestens einem der vorhergehenden Ansprüche, wobei die erste Laufstreifen-Oberteillage (21) und die zweite Laufstreifen-Oberteillage (22) beide mit dem Boden in Kontakt treten, wenn die Lauffläche (10) an einem Reifen (1) angebracht ist, der an einem Fahrzeug montiert ist, und wobei die axiale Breite, über welche die erste Laufstreifen-Oberteillage mit dem Boden in Kontakt tritt, im Bereich von 10% bis 45%, alternativ 20% bis 40% oder 25% bis 35%, der axialen Breite der Reifenaufstandsfläche liegt, und die axiale Breite, über welche die zweite Laufstreifen-Oberteillage mit dem Boden in Kontakt tritt, im Bereich von 55% bis 90%, alternativ 60% bis 80% oder 65% bis 75%, der axialen Breite der Reifenaufstandsfläche liegt.

5. Lauffläche nach Anspruch 4, wobei die axiale Breite, über welche die erste Laufstreifen-Oberteillage mit dem Boden in Kontakt tritt, im Bereich von 20% bis 40% oder 25% bis 35% der axialen Breite der Reifenaufstandsfläche liegt, und die axiale Breite, über welche die zweite Laufstreifen-Oberteillage mit dem Boden in Kontakt tritt, im Bereich von 60% bis 80% oder 65% bis 75% der axialen Breite der Reifenaufstandsfläche liegt.

6. Lauffläche nach mindestens einem der vorhergehenden Ansprüche, wobei:
(i) die Laufstreifen-Unterteillage (20) mindestens eines von einem tan delta im Bereich von 0,1 bis 0,2, einem Speichermodul im Bereich von 4 MPa bis 13 MPa und einer Shore A-Härte im Bereich von 45 bis 70 aufweist;
(ii) die erste Laufstreifen-Oberteillage (21) mindestens eines von einem tan delta im Bereich von 0,05 bis 0,2, einem Speichermodul im Bereich von 4 MPa bis 12 MPa und einer Shore A-Härte im Bereich von 50 bis 75 aufweist;
(iii) die zweite Laufstreifen-Oberteillage (22) mindestens eines von einem tan delta im Bereich von 0,05 bis 0,2, einem Speichermodul im Bereich von 4 MPa bis 12 MPa und einer Shore A-Härte im Bereich von 55 bis 80 aufweist.

7. Lauffläche nach mindestens einem der vorhergehenden Ansprüche, wobei die Shore A-Härte der Laufstreifen-Unterteillage (20) mindestens 10% niedriger als die Shore A-Härte der ersten Laufstreifen-Oberteillage (21) und der zweiten Laufstreifen-Oberteillage (22) ist, und wobei die Shore A-Härte der zweiten Laufstreifen-Oberteillage (22) mindestens 5% höher als die Shore A-Härte der ersten Laufstreifen-Oberteillage (21) ist.

8. Lauffläche nach mindestens einem der vorhergehenden Ansprüche, wobei die erste Laufstreifen-Oberteillage (21) ein auf konjugiertem Dien basiertes Elastomer, Carbon Black und Silika umfasst, und wobei die zweite Laufstreifen-Oberteillage (22) ein auf konjugiertem Dien basiertes Elastomer, Carbon Black und optional Silika umfasst, wobei
(i) der Carbon Black-Gehalt der ersten Laufstreifen-Oberteillage (21) niedriger, bevorzugt mindestens 10 phr niedriger, als der Carbon Black-Gehalt der zweiten Laufstreifen-Oberteillage (22) ist; und/oder
(ii) der Silikagehalt der ersten Laufstreifen-Oberteillage (21) höher, bevorzugt mindestens 20 phr oder mindestens 40 phr höher, als der Silikagehalt der zweiten Laufstreifen-Oberteillage (22) ist.

9. Lauffläche nach mindestens einem der vorhergehenden Ansprüche, wobei ein Endabschnitt der zweiten Laufstreifen-Oberteillage (22) sich radial einwärts zu einem Verbindungspunkt (34) der Laufstreifen-Unterteillage (20), der ersten Laufstreifen-Oberteillage (21) und des zweiten Laufstreifen-Seitenteils (32) erstreckt.

10. Luftreifen, umfassend eine Lauffläche in Übereinstimmung mit mindestens einem der vorhergehenden Ansprüche.

11. Luftreifen nach Anspruch 10, wobei sich der Abschnitt der zweiten Laufstreifen-Oberteillage (22) axial benachbart zu dem Abschnitt der ersten Laufstreifen-Oberteillage (21) an der axial äußeren Seite des Reifens (1) befindet, wenn der Reifen an einem Fahrzeug in Übereinstimmung mit der Reifenspezifikation montiert ist.

12. Luftreifen nach Anspruch 10, wobei sich die erste Laufflächenkante an der axial inneren Seite des Reifens (1) befindet, wenn der Reifen an einem Fahrzeug in Übereinstimmung mit der Reifenspezifikation montiert ist, und die zweite Laufflächenkante sich an der axial äußeren Seite des Reifens (1) befindet, wenn der Reifen an einem Fahrzeug in Übereinstimmung mit der Reifenspezifikation montiert ist.

13. Verfahren zur Herstellung einer Lauffläche in Übereinstimmung mit mindestens einem der Ansprüche 1 bis 9, wobei:
(i) die erste Laufstreifen-Oberteillage (21) als einstückiges Extrudat aus einer einzigen Kautschukmischung in einem Extruder extrudiert wird und die zweite Laufstreifen-Oberteillage (22) durch einen anderen Extruder extrudiert wird; oder
(ii) die erste Laufstreifen-Oberteillage (21) als einstückiges Extrudat aus einer einzigen Kautschukmischung in einem Extruder extrudiert wird und die zweite Laufstreifen-Oberteillage (22) als einstückiges Extrudat aus einer einzigen Kautschukmischung mit der ersten Laufstreifen-Oberteillage (21) in demselben Extruder koextrudiert wird.

14. Verfahren nach Anspruch 13, wobei die Laufstreifen-Unterteillage (20) ein mit der ersten Laufstreifen-Oberteillage (21) koextrudiertes einstückiges Extrudat ist.

## Revendications

1. Bande de roulement pour un bandage pneumatique, la bande de roulement (10) comprenant une couche de base de bande de roulement (20), une première couche de chape de bande de roulement (21) à l'extérieur en direction radiale de la couche de base de bande de roulement (20) et une deuxième couche de chape de bande de roulement (22) à l'extérieur en direction radiale de la couche de base de bande de roulement (20) ; dans laquelle la deuxième couche de chape de bande de roulement (22) possède une portion à l'extérieur en direction radiale d'une portion de la première couche de chape de bande de roulement (21) et une portion en position adjacente en direction axiale à une portion de la première couche de chape de bande de roulement (21) ; **caractérisée en ce que**
(i) la première couche de chape de bande de roulement (21) et/ou la deuxième couche de chape de bande de roulement (22) possèdent essentiellement la forme d'un L en section transversale ; dans laquelle la dureté Shore A de la couche de base de bande de roulement (20) est inférieure à la dureté Shore A de la première couche de chape de bande de roulement (21) et de la deuxième couche de chape de bande de roulement (22) ; et dans laquelle la dureté Shore A de la deuxième couche de chape de bande de roulement (22) est supérieure à la dureté Shore A de la première couche de chape de bande de roulement (21) ; ou **en ce que**
(ii) la bande de roulement (10) comprend en outre une première jupe de bande de roulement (31) disposée à un premier bord de bande de roulement et en position adjacente en direction axiale à la couche de base de bande de roulement (20) et à la première couche de chape de bande de roulement (21), et une deuxième jupe de bande de roulement (32) disposée à un deuxième bord de bande de roulement et en position adjacente en direction axiale à la couche de base de bande de roulement (20) et à la deuxième couche de chape de bande de roulement (22) ; dans laquelle la première jupe de bande de roulement (31) n'entre pas en contact avec la deuxième couche de chape de bande de roulement (22).

2. Bande de roulement selon la revendication 1, dans laquelle la deuxième jupe de bande de roulement (32) entre en contact avec la couche de base de bande de roulement (20), avec la deuxième couche de chape de bande de roulement (22) et n'entre pas en contact avec la première couche de chape de bande de roulement (21).

3. Bande de roulement selon la revendication 1, dans laquelle la deuxième jupe de bande de roulement (32) entre en contact avec la couche de base de bande de roulement (20), avec la deuxième couche de chape de bande de roulement (22) et en contact avec la première couche de chape de bande de roulement (21).

4. Bande de roulement selon au moins une des revendications précédentes, dans laquelle la première couche de chape de bande de roulement (21) et la deuxième couche de chape de bande de roulement (22) entrent toutes deux en contact avec le sol lorsque la bande de roulement (10) est fixée à un bandage pneumatique (1) monté sur un véhicule ; et dans laquelle la largeur axiale sur laquelle la première couche de chape de bande de roulement entre en contact avec le sol se situe dans une plage allant de 10 % à 45 %, en variante de 20 % à 40 % ou de 25 % à 35 % de la largeur axiale de l'empreinte du bandage pneumatique, et la largeur axiale sur laquelle la deuxième couche de chape de bande de roulement entre en contact avec le sol se situe dans une plage allant de 55 % à 90 %, en variante de 60 % à 80 % ou de 65 % à 75 %, de la largeur axiale de l'empreinte du bandage pneumatique.

5. Bande de roulement selon la revendication 4, dans laquelle la largeur axiale sur laquelle la première couche de chape de bande de roulement entre en contact avec le sol se situe dans une plage allant de 20 % à 40 % ou de 25 % à 35 % de la largeur axiale de l'empreinte du bandage pneumatique, et la largeur axiale sur laquelle la deuxième couche de chape de bande de roulement entre en contact avec le sol se situe dans une plage allant de 60 % à 80 % ou de 65 % à 75 %, de la largeur axiale de l'empreinte du bandage pneumatique.

6. Bande de roulement selon au moins une des revendications précédentes, dans laquelle :
(i) la couche de base de bande de roulement (20) possède au moins une caractéristique choisie parmi une valeur tan delta qui se situe dans la plage de 0,1 à 0,2, un module de stockage qui se situe dans la plage de 4 MPa à 13 MPa, et une dureté Shore A qui se situe dans la plage de 45 à 70 ;
(ii) la première couche de chape de bande de roulement (21) possède au moins une caractéristique choisie parmi une valeur tan delta qui se situe dans la plage de 0,05 à 0,2, un module de stockage qui se situe dans la plage de 4 MPa à 12 MPa, et une dureté Shore A qui se situe dans la plage de 50 à 75 ; et
(iii) la deuxième couche de chape de bande de roulement (22) possède au moins une caractéristique choisie parmi une valeur tan delta qui se situe dans la plage de 0,05 à 0,2, un module de stockage qui se situe dans la plage de 4 MPa à 12 MPa, et une dureté Shore A qui se situe dans la plage de 55 à 80.

7. Bande de roulement selon au moins une des revendications précédentes, dans laquelle la dureté Shore A de la couche de base de bande de roulement (20) est inférieure à concurrence d'au moins 10 % à la dureté Shore A de la première couche de chape de bande de roulement (21) et de la deuxième couche de chape de bande de roulement (22) ; et dans laquelle la dureté Shore A de la deuxième couche de chape de bande de roulement (22) est supérieure à concurrence d'au moins 5 % à la dureté Shore A de la première couche de chape de bande de roulement (21).

8. Bande de roulement selon au moins une des revendications précédentes, dans laquelle la première couche de chape de bande de roulement (21) comprend un élastomère à base d'un diène conjugué, du noir de carbone et de la silice ; et dans laquelle la deuxième couche de chape de bande de roulement (22) comprend un élastomère à base d'un diène conjugué, du noir de carbone et de manière facultative, de la silice ; dans laquelle
(i) la teneur de la première couche de chape de bande de roulement (21) en noir de carbone est inférieure, de préférence inférieure à concurrence d'au moins 10 phr, à la teneur de la deuxième couche de chape de bande de roulement (22) en noir de carbone ; et/ou
(ii) la teneur de la première couche de chape de bande de roulement (21) en silice est supérieure, de préférence supérieure à concurrence d'au moins 20 phr ou d'au moins 40 phr, à la teneur de la deuxième couche de chape de bande de roulement (22) en silice.

9. Bande de roulement selon au moins une des revendications précédentes, dans laquelle une portion terminale de la deuxième couche de chape de bande de roulement (22) s'étend vers l'intérieur en direction radiale jusqu'à une jonction (34) de la couche de base de bande de roulement (20), de la première couche de chape de bande de roulement (21) et de la deuxième jupe de bande de roulement (32).

10. Bandage pneumatique comprenant une bande de roulement selon au moins une des revendications précédentes.

11. Bandage pneumatique selon la revendication 10, dans lequel la portion de la deuxième couche de chape de bande de roulement (22) en position adjacente en direction axiale à la portion de la première couche de chape de bande de roulement (21) se trouve sur le côté externe axial du bandage pneumatique (1) lorsque le bandage pneumatique est monté sur un véhicule conformément aux spécifications du bandage pneumatique.

12. Bandage pneumatique selon la revendication 10, dans lequel le premier bord de bande de roulement se trouve sur le côté axial interne du bandage pneumatique (1) lorsque le bandage pneumatique est monté sur un véhicule en conformité avec les spécifications du bandage pneumatique et le deuxième bord de bande de roulement se trouve sur le côté axial externe du bandage pneumatique (1) lorsque le bandage pneumatique est monté sur un véhicule en conformité avec les spécifications du bandage pneumatique.

13. Procédé de confection d'une bande de roulement selon au moins une des revendications 1 à 9, dans lequel :
(i) la première couche de chape de bande de roulement (21) est extrudée sous la forme d'un extrudat unitaire d'un composé de caoutchouc unique dans une extrudeuse et la deuxième couche de chape (22) est extrudée en passant par une autre extrudeuse ; ou
(ii) la première couche de chape de bande de roulement (21) est extrudée sous la forme d'un extrudat unitaire d'un composé de caoutchouc unique dans une extrudeuse et la deuxième couche de chape de bande de roulement (22) est coextrudée sous la forme d'un extrudat unitaire d'un composé de caoutchouc unique avec la première couche de chape de bande de roulement (21) dans la même extrudeuse.

14. Procédé selon la revendication 13, dans lequel la couche de base de bande de roulement (20) représente un extrudat unitaire coextrudé avec la première couche de chape de bande de roulement (21).
